# EUROPEAN PATENT APPLICATION

(11) **EP 3 584 233 A1**
(43) Date of publication of application: **25.12.2019**
(21) Application number: 18776639.9
(22) Date of filing: 06.03.2018
(51) Int. Cl.: C04B 35/19, C03C 10/12

(54) **COMPOSITION AND SHAPING OF A CERAMIC MATERIAL WITH LOW THERMAL EXPANSION COEFFICIENT AND HIGH RESISTANCE TO THERMAL SHOCK**

(30) Priority: 27.03.2017 ES 201730419
(71) Applicant: Torrecid, S.A., 12110 Alcora (Castellón) (ES)
(72) Inventor: CONCEPCIÓN HEYDORN, Carlos, 12110 Alcora (Castellón) (ES); SANMIGUEL ROCHE, Francisco, 12110 Alcora (Castellón) (ES); RUIZ VEGA, Óscar, 12110 Alcora (Castellón) (ES); FERRANDO CATALÁ, Vicente, 12110 Alcora (Castellón) (ES)
(74) Representative: Carlos Hernando, Borja
(86) International application number: PCT/ES2018/070161
(87) International publication number: WO 2018/178436

(57) **Abstract**

The present invention is a composition and shaping of a ceramic material comprising at least one frit and at least one inorganic raw material. Some of the advantages are that said material requires a heat treatment no higher than 1180°C, that the duration of said heat treatment does not exceed 60 minutes, that the thermal expansion coefficient after the heat treatment is less than 25 x10⁻⁷°C⁻¹ in the temperature range 25°C to 500°C and that the material exhibits a high resistance to thermal shock, withstanding at least 10 consecutive thermal shock cycles between 600°C and 25°C without forming cracks or structural changes. The ceramic material composition is shaped by uniaxial pressing, band pressing, pour moulding, extrusion, injection moulding or lamination.

## Description

### Object of the Invention

The present invention relates to a composition and shaping of a ceramic material exhibiting a low thermal expansion coefficient (TEC) and a high resistance to thermal shock or sudden temperature changes, once subjected to a heat treatment with a maximum temperature of 1180°C and with a maximum duration of 60 minutes.

As a result of these two properties, the ceramic material object of the invention is aimed at those applications which require exhibiting stability at high temperatures and which are subjected to heating and cooling cycles. Illustrative but non-limiting examples of applications are ceramic tiles, radiators, heaters, warmers, high temperature particle filters, kitchen surfaces and worktops and work surfaces in laboratories.

The present invention is encompassed within the ceramic materials which require a prior heat treatment and which are aimed at high temperature or thermal shock applications.

### Description of the State of the Art

Ceramic materials with low thermal expansion coefficient are especially useful in applications in which heating and cooling cycles as well as sudden temperature changes, also known as thermal shock, take place.

In fact, the state of the art prior to the present invention describes compositions of ceramic material which, after a heat treatment, are characterised by a low thermal expansion coefficient.

Thus, patent US8257831B2 protects a composition of ceramic material essentially formed by SiO₂, Al₂O₃ and Li₂O including P₂O₅ and characterised in that, once subjected to a heat treatment of melting, nucleation and crystallisation, it has a thermal expansion coefficient comprised between -10x10⁻⁷°C⁻¹ and 50x10⁻⁷°C⁻¹ in the temperature range of 25°C to 100°C. Likewise, patent US8257831B2 is characterised by using temperatures of heat treatment between 600°C and 1500°C and with a duration thereof comprised between 2 hours and 40 hours. Furthermore, the presence of P₂O₅ in the composition reduces the chemical resistance of the end product.

In addition, patent application WO2004094334A2 describes a composition of ceramic material containing as the main phase the compound of formula CaAl₄O₇ as result of a heat treatment comprised between 1450°C and 1600°C and which is characterised by exhibiting a thermal expansion coefficient less than 10x10⁻⁷°C⁻¹ in the temperature range between 25°C and 800°C and a high resistance to thermal shock. Furthermore, as described in document WO2004094334A2, the time of heat treatment is 6 hours. Furthermore, the composition according to patent application WO2004094334A2 includes Fe₂O₃ which would colour the same unnecessarily or, in the event of using pigments, making it necessary to carry out pigmentation corrections.

Likewise, patent application WO2011008938A1 discloses a composition of ceramic material of formula MgₓAl₂₍₁₊ₓ₎Ti₍₁₊ₓ₎O₅ (0≤x<1) as a result of the heat treatment between 1200°C and 1700°C, preferably between 1400°C and 1600°C, of a mixture comprising the raw materials, expressed in oxides, TiO₂, Al₂O₃, MgO and SiO₂. The ceramic material is characterised by a thermal expansion coefficient less than 30.0x10⁻⁷ K⁻¹ in the temperature range comprised between 30°C and 1000°C. Additionally, said application WO2011008938A1 preferably describes the use of frits as a source of SiO₂ due to its industrial availability as well as feldspar as a source of Al₂O₃. As for the time of heat treatment, as indicated in the examples, it is not less than 34 hours. Likewise, the raw materials based on TiO₂ and Al₂O₃ are refractory, i.e. with a high melting point, which require high temperatures, preferably between 1400°C and 1600°C to achieve a correct sintering and therefore the target properties.

The ceramic materials described in the previous patents have the particular drawbacks indicated in addition to the common drawback that all of them require temperatures greater than 1200°C, in some cases reaching 1600°C, and with long times of heat treatment, not less than 2 hours.

Based on these limitations in the current state of the art, the objective of the present invention is a composition of ceramic material with low thermal expansion coefficient and high resistance to thermal shock characterised by solving the existing technical problems and requiring a heat treatment with a maximum temperature of 1180°C and a duration not exceeding 60 minutes. This decrease in the temperature and in the time of the heat treatment further provide a reduction in the energy consumption and therefore, in the cost and in the environmental impact.

### Description of the Invention

Throughout the invention and the claims the word "comprises" and its variants do not intend to exclude other technical features, additives, components or steps. For the persons skilled in the art, other objects, advantages and features of the invention will be inferred partly from the description and partly from the practice of the invention.

The present invention is a ceramic material comprising at least one frit and at least one inorganic raw material. Some of the advantages are that it requires a heat treatment at a maximum temperature of 1180°C, that the duration of said heat treatment does not exceed 60 minutes, that, after the heat treatment, it has a thermal expansion coefficient less than 25x10⁻⁷°C⁻¹ in the temperature range comprised between 25°C and 500°C and that it exhibits a high resistance to thermal shock.

The expression "heat treatment", as used in the present invention, refers to a thermal cycle which allows transforming a shaped powdered product into another compact and coherent one, as a result of physicochemical bonding of the initial components and which can additionally cause chemical transformation reactions of the initial components into new chemical species.

The function of the frits used in the present invention is to decrease the maximum temperature of heat treatment and act as a binder between the other ceramic components of the material. To that end, the frits have a thermal expansion coefficient between 18x10⁻⁷°C⁻¹ and 50x10⁻⁷°C⁻¹ in the temperature range comprised between 25°C and 500°C and is in the composition of the ceramic material in a percentage by weight comprised between 15% and 45%, preferably between 15% and 35%. The main components of the frits, expressed in oxides, are indicated below. The final value of each component of the frit will depend on the final thermal expansion coefficient which is to be achieved.

| Element | % by weight |
|---|---|
| SiO₂ | 50-60% |
| Al₂O₃ | 8-25% |
| Li₂O | 1-10% |
| B₂O₃ | 5-30% |
| CaO | 0.1-10% |
| MgO | 0.1-5% |
| TiO₂ | 0-2.5% |
| ZnO | 0-10% |
| BaO | 0-10% |
| ZrO₂ | 0-3% |
| Na₂O | 0-2% |
| K₂O | 0-2% |

It must be emphasised that although the main elements of the frit are expressed in oxides, both oxides and inorganic salts (carbonates, silicates, nitrates, feldspars, among others) of the corresponding cations can be used in the formulation of the frit.

In the present invention "frit" is understood as the result of a mixture of inorganic compounds which has been subjected to a process of melting and subsequent cooling to obtain an amorphous glassy compound, i.e., without a crystalline structure.

Another aspect of the present invention is that the ceramic material contains in its composition at least one inorganic raw material in a percentage by weight comprised between 55% and 85%.

The expression "inorganic raw material", as used in the present invention, refers to any chemical compound other than the frits which is directly incorporated into the composition of the ceramic material object of the invention and which is selected from magnesium carbonate, calcium carbonate, spodumene, montmorillonitic clays, preferably bentonite, kaolinitic clays, preferably kaolin, wollastonite, dolomite, cordierite, kaolinite, illite, nepheline, zinc oxide, aluminium oxide, titanium oxide, magnesium silicate, zirconium silicate, zirconium oxide, feldspars, sodium aluminosilicate, potassium aluminosilicate, magnesium aluminosilicate, boric acid or a mixture thereof.

In a preferred embodiment, the inorganic raw material of the ceramic material comprises spodumene -LiAl(SiO₃)₂- in a percentage by weight comprised between 55% and 85%.

In another preferred embodiment the composition of ceramic material contains at least one ceramic pigment, with a D100 particle size of up to 5 micrometres if, additionally, chromatic and/or optical properties are to be provided to the composition. In this case, the ceramic pigments are in the composition of ceramic material in a percentage by weight comprised between 0% and 10% and are selected from simple oxides, mixed oxides and crystalline structures of any composition.

The ceramic material object of the invention can be shaped by means of any of the existing industrial methods. Illustrative but non-limiting examples are uniaxial pressing, band pressing, pour moulding, extrusion, injection moulding and lamination, among others. For the purpose of facilitating the shaping, the composition can also include specific additives to facilitate said process, in a percentage by weight comprised between 0% and 5%. Illustrative but non-limiting examples are acrylic derivatives, polyvinyl alcohol and its derivatives and cellulose derivatives.

The present invention also describes the option of applying, on the surface of the shaped ceramic material and prior to the heat treatment, a composition referred to as "surface layer" aimed at increasing properties such as chemical resistance, resistance to cleaning agents, scratch resistance and/or corrosion resistance, as well as decreasing the roughness. Said surface layer is applied by means of the different techniques of deposition of ceramic materials such as waterfall, bell, disc, gun, screen printing, inkjet, etc. The composition of the surface layer can contain a ceramic pigment with a D100 particle size of up to 5 micrometres and in a percentage by weight comprised between 5% and 15%, silicon dioxide with a D100 particle size of up to 2 micrometres and in a percentage by weight comprised between 0% and 10%, zirconium silicate with a D100 particle size of up to 5 micrometres and in a percentage by weight comprised between 5% and 15%, zinc oxide with a D100 particle size of up to 5 micrometres and in a percentage by weight comprised between 0% and 10%, a silicon alkoxide which is liquid at room temperature, also known as organosilane, in a percentage by weight comprised between 70% and 95% or a mixture thereof. Finally, it can also contain water the content of which will vary according to the application technique.

In a preferred embodiment of the invention, the shaping and heat treatment of the composition of ceramic material is carried out by means of uniaxial pressing and using a method according to the usual production methods in the manufacture of ceramic tiles comprising the following steps:
(1) Joint milling of a composition of ceramic material according to the invention, milling additives and water until achieving a D100 particle size of up to 40 micrometres.
(2) Addition of at least one ceramic pigment, in the event that it is required, and shaping additives for shaping by uniaxial pressing, if necessary.
(3) Spray drying of the previous mixture to obtain atomised particles with a D100 grain size distribution comprised between 100 micrometres and 600 micrometres. Spray drying is understood as an industrial process which allows transforming solids in suspension into spherical and hollow particles. The process is characterised by spraying a normally aqueous suspension or dispersion of the material through a nozzle in the direction opposite a hot air stream. As a result, spherical and hollow particles of the material are formed, which are called atomised.
(4) Uniaxial pressing for the purpose of achieving pieces of ceramic material object of the invention which are either smooth or with a determined relief and with a thickness of 3 mm or more.
(5) Optionally, a composition referred to as "surface layer" can be applied on the surface of the previously shaped piece.
(6) Drying of the shaped piece at a temperature between 100°C and 200°C.
(7) Heat treatment of the shaped piece at a maximum temperature of 1180°C and a time not exceeding 60 minutes.

As has been indicated above, the ceramic material object of the present invention has a thermal expansion coefficient less than 25x10⁻⁷°C⁻¹ in the temperature range comprised between 25°C and 500°C. The measurement of the thermal expansion coefficient (also know by the abbreviation TEC) is well known by a person skilled in the art and is carried out by means of a dilatometer (of the BAHR Model DIL 801L THERMO ANALYSE brand type or the like). To that end, a piece of the ceramic material with dimensions 10 cm x 10 cm is prepared and fired at the temperature of heat treatment according to the present invention. Once the firing is carried out, a section of the piece with a length of 5 cm and a width of 3 cm is cut and polished until it adopts a cylindrical shape. Once the cylinder is obtained, it is introduced in the dilatometer to carry out the measurement of the TEC in the desired temperature range. According to the present invention, the composition of ceramic material resulting from the heat treatment is characterised by withstanding at least 10 consecutive thermal shock cycles between 600°C and 25°C without forming cracks or structural changes. For the measurement of the resistance to thermal shock the ceramic material object of invention is shaped into a 10 cm x 10 cm test piece with a thickness of 4 mm and is subjected to the corresponding heat treatment according to the present invention. Once the heat treatment is performed, the evaluation of the resistance to thermal shock is started. To that end, the piece is introduced into an oven and is heated to 600°C, said temperature being maintained for 10 minutes. Then, it is removed from the oven and immediately introduced into a water bath at 25°C for 5 minutes. After this time, the piece is removed from the bath and an inspection thereof is performed to detect the presence of cracks or other defects. If the piece remains unchanged, the cycle of heating to 600°C, submersion in a water bath at 25°C and evaluation is repeated until the presence of cracks or structural changes is detected. If the piece resists 10 consecutive cycles it is considered that it exhibits a high resistance to thermal shock.

In certain applications as is the case of laboratory work surfaces and outdoor applications, it is also very important for the ceramic material to not absorb liquids to prevent effects such as the breakage due to frost, degradation by chemical agents, low resistance to stains, etc. In this sense, the ceramic material object of the present invention is characterised by having a water absorption less than 1%. Measurement of water absorption allows evaluating the impermeability of the material. The measurement method consists of immersing a piece of the ceramic material with dimensions 5 cm x 5 cm and a thickness of 6 mm and with a known mass (m0), in a water bath at a temperature of 25°C for 24h. After that time, the piece is dried at 25°C for 15 minutes to eliminate the surface water and it is weighed again, noting down its mass (m1). Finally, the quotient between (m1-m0)/m0 expressed as a percentage, indicates the percentage of water absorption.

### Preferred Embodiments

To complete the description which is being made and for the purpose of aiding to better understand its features, several embodiments of the ceramic material object of the present invention are attached to the present specification.

Al the embodiments described and illustrative and non-limiting.

Seven compositions of ceramic material according to the present invention referred to as C1, C2, C3, C4, C5, C6 and C7, respectively, were prepared. Composition C3 included a blue ceramic pigment which allows providing the ceramic material with colour. All the compositions are expressed as percentage by weight.

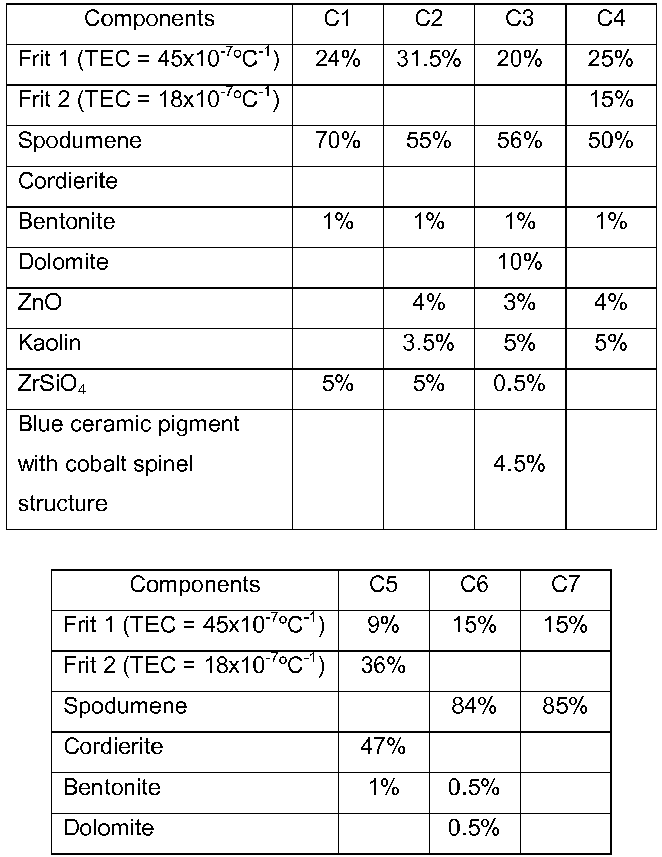

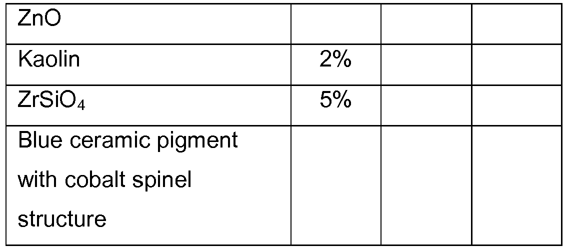

### Examples 1, 2, 3, 4, 5, 6 and 7. Shaping by means of uniaxial pressing using the usual technical means in the manufacture of ceramic tiles.

Starting from compositions C1, C2, C3, C4, C5, C6 and C7 described above, a shaping of each of them was performed using an industrial uniaxial press usually used in the manufacture of ceramic tiles, for the purpose of achieving 30 cm x 30 cm pieces with a thickness of 10 mm, referred to respectively as P1, P2, P3, P4, P5, P6 and P7. Piece P1 was obtained from composition C1, P2 from composition C2, P3 from composition C3, P4 from composition C4, P5 from composition C5, P6 from C6 and P7 from composition C7.

The method of shaping and heat treatment of compositions C1, C2, C3, C4 C5, C6 and C7 comprised the following steps:
(1) Milling of each composition C1 to C7 with milling additives and water until achieving a D100 particle size of up to 40 micrometres.
(2) Addition of 2% by weight of the mixture according to step 1 of acrylic binder as a shaping additive, except in composition C7 in which 2% of said acrylic binder and 1% of polyvinyl alcohol were added.
(3) Spray drying of the previous mixture to obtain atomised articles with a D100 grain size distribution comprised between 100 micrometres and 600 micrometres.
(4) Uniaxial pressing with a pressure of 400 Kg/cm² to achieve 30 cm x 30 cm pieces with a thickness of 10 mm.
(5) Drying of the pieces at a temperature of 150°C for 20 minutes.
(6) Heat treatment of the pieces in an industrial gas oven usually used in the manufacture of ceramic tiles at a maximum temperature of 1120°C and with a duration of 50 minutes.

Once the indicated heat treatment was performed, each of the pieces of ceramic material exhibited the following properties. As indicated, all the pieces passed the test of resistance to thermal shock, after at least 10 consecutive cycles had been performed.

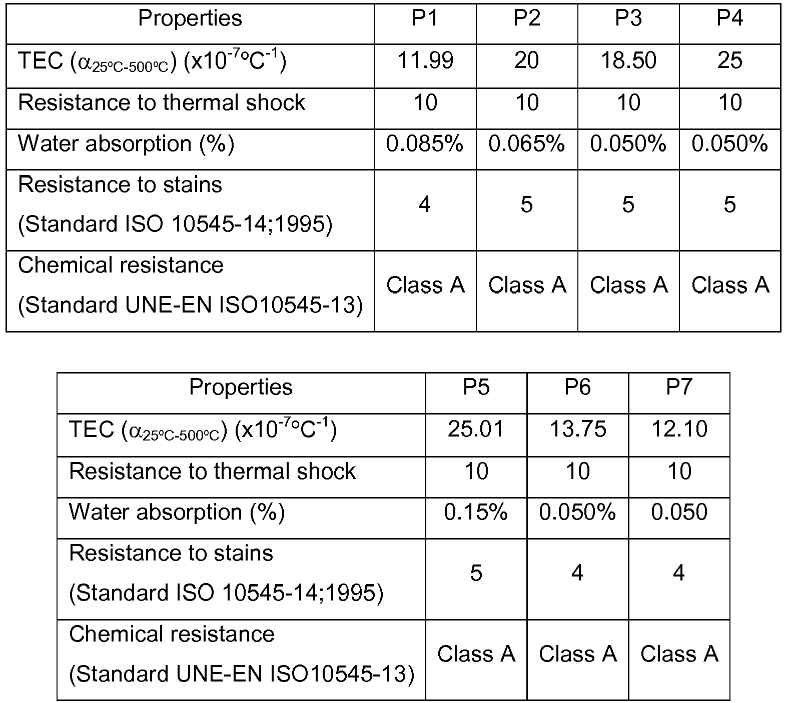

### Example 8. Shaping by means of uniaxial pressing using the usual technical means in the manufacture of ceramic tiles with the application of a surface layer.

Additionally, another piece (P8) consisting of the composition of ceramic material C1 was prepared, on which, once it was shaped by means of uniaxial pressing, a composition of surface layer was applied,. The composition of the surface layer made by way of example, is indicated below:

| Surface layer components | % by weight |
|---|---|
| ZrSiO₄ | 5 |
| SiO₂ (Cabosil®, Cabot Corporation) | 5 |
| Epoxysilane hydrolysed in water | 90 |

The method of shaping for said compositions comprised the following steps:
(1) Joint milling of composition C1 with milling additives and water until achieving a D100 particle size of up to 40 micrometres.
(2) Addition of 2% by weight of the mixture according to step 1 of acrylic binder as a shaping additive.
(3) Spray drying of the previous mixture until achieving atomised particles with a D100 grain size distribution comprised between 100 micrometres and 600 micrometres.
(4) Uniaxial pressing with a pressure of 400 Kg/cm² to achieve 30 cm x 30 cm pieces with a thickness of 10 mm.
(5) Application of the composition of the surface layer by means of aerography, depositing a 7.5 g/m² grammage on the surface of the piece shaped in step (4).
(6) Drying of the piece at a temperature of 150°C for 20 minutes.
(7) Heat treatment of the piece in an industrial gas oven usually used in the manufacture of ceramic tiles at a maximum temperature of 1120°C and with a duration of 50 minutes.

The following table shows the properties of the piece obtained from example 1 (P1) and from example 8 (P8).

| Properties | P1 | P8 |
|---|---|---|
| TEC (α_{25°C-500°C}) (x10⁻⁷°C⁻¹) | 11.99 | 11.89 |
| Resistance to thermal shock | 10 | 10 |
| Water absorption (%) | 0.085% | 0.060% |
| Roughness (micrometres) | 5.15 | 2.85 |
| Resistance to stains (Standard ISO 10545-14;1995) | 4 | 5 |
| Chemical resistance (Standard UNE-EN ISO10545-13) | Class A | Class A |

The results indicate that piece P8, containing the surface layer, improves the resistance to stains and decreases the roughness of the surface by 2.3 micrometres. In addition, both pieces passed the test of resistance to thermal shock.

### Examples 9 and 10. Shaping by means of extrusion.

Starting from compositions C1 and C3 described above, a shaping of each of them was carried out by means of extrusion using the conventional manufacturing methods generally used in the industry for the purpose of achieving 30 cm x 30 cm laminated pieces with a thickness of 5 mm, referred to respectively as P9 and P10. Piece P9 was prepared from composition C1 and P10 from composition C3. Once both pieces were shaped, a heat treatment was performed at a temperature of 1170°C and with a duration of 55 minutes.

The following table shows the properties of the pieces obtained according to the invention.

| Properties | P9 | P10 |
|---|---|---|
| TEC (α_{25°C-500°C}) (x10⁻⁷°C⁻¹) | 12.40 | 14.10 |
| Resistance to thermal shock | 10 | 10 |
| Water absorption (%) | 0.080% | 0.060% |

## Claims

1. A composition of ceramic material for shaping **characterised in that** it comprises:
- at least one frit in a percentage by weight comprised between 15% and 45% with a thermal expansion coefficient between 18x10⁻⁷°C⁻¹ and 50x10⁻⁷°C⁻¹ in the temperature range comprised between 25°C and 500°C, and
- at least one inorganic raw material in a percentage by weight comprised between 55% and 85%.

2. The composition according to claim 1, wherein the inorganic raw material comprises spodumene in a percentage by weight between 55% and 85%.

3. The composition according to any of the preceding claims, wherein the percentage by weight of the frit is comprised between 15% and 35%.

4. The composition according to any of the preceding claims, comprising at least one ceramic pigment with a D100 particle size of up to 5 micrometres and in a percentage by weight comprised between 0% and 10%.

5. An atomised particle for uniaxial pressing **characterised in that** it comprises:
- a composition of ceramic material according to claims 1 to 4,
- milling additives,
- shaping additives for shaping by uniaxial pressing,
- a D100 grain size distribution comprised between 100 micrometres and 600 micrometres.

6. A method for obtaining an atomised particle for uniaxial pressing **characterised in that** it comprises:
(1) Joint milling of the composition of ceramic material according to claims 1 to 4 with milling additives and water until achieving a D100 particle size of up to 40 micrometres,
(2) Addition of shaping additives for shaping by uniaxial pressing, and
(3) Spray drying of the previous mixture to obtain atomised particles with a D100 grain size distribution comprised between 100 micrometres and 600 micrometres.

7. A shaped ceramic material **characterised in that** it comprises:
- a composition of ceramic material according to any of claims 1 to 4, and
- a thermal expansion coefficient less than 25x10⁻⁷°C⁻¹ in the temperature range comprised between 25°C and 500°C.

8. A method for obtaining a shaped ceramic material according to claim 7, **characterised in that** it comprises at least the following steps:
(1) mixing of a composition of ceramic material according to claims 1 to 4,
(2) shaping of the mixture, and
(3) heat treatment of the mixture shaped at a maximum temperature of 1180°C and a duration not exceeding 60 minutes to obtain a ceramic material with a thermal expansion coefficient less than 25 x10⁻⁷°C⁻¹ in the temperature range comprised between 25°C and 500°C.

9. The method according to claim 8, wherein the step of shaping the mixture is carried out by means of uniaxial pressing and/or band pressing and/or pour moulding and/or extrusion and/or, injection moulding and/or lamination.

10. The method according to claim 8, **characterised in that** the step of shaping the mixture comprises at least:
(1) Obtaining atomised particles for uniaxial pressing according to claim 6, and
(2) Uniaxial pressing of said atomised particles.
